# EUROPÄISCHE PATENTSCHRIFT

(11) **EP 3 631 369 B1**
(45) Veröffentlichungstag und Bekanntmachung des Hinweises auf die Patenterteilung: **12.01.2022**
(21) Anmeldenummer: 18725390.1
(22) Anmeldetag: 30.04.2018
(51) Int. Cl.: G01D 5/12, H01L 23/538, H01L 25/16, H01L 23/00

(54) **HYBRIDMODUL EINER MONOLITHISCHEN BAUGRUPPE MIT EINEM ELEKTRISCHEN LEITER**
HYBRID MODULE IN A MONOLITHIC ASSEMBLY HAVING AN ELECTRICAL CONDUCTOR
MODULE HYBRIDE D'UN ENSEMBLE MONOLITHIQUE COMPRENANT UN CONDUCTEUR ÉLECTRIQUE

(30) Priorität: 31.05.2017 DE 102017111857
(43) Veröffentlichungstag der Anmeldung: 08.04.2020
(73) Patentinhaber: Schaeffler Technologies AG & Co. KG, 91074 Herzogenaurach (DE)
(72) Erfinder: LEHMANN, Steffen, 76275 Ettlingen (DE); TRINKENSCHUH, Andreas, 77815 Bühl (DE); KÄSTLE, Matthias, 77886 Lauf (DE)
(86) Internationale Anmeldenummer: PCT/DE2018/100412
(87) Internationale Veröffentlichungsnummer: WO 2018/219384

(56) Entgegenhaltungen:
- EP-A1- 2 846 136
- WO-A1-2015/054432
- WO-A1-2016/165705
- WO-A2-2015/188819
- DE-A1- 4 319 720
- DE-A1-102016 216 933

## Beschreibung

Die Erfindung betrifft ein Hybridmodul mit einem Rotorträger, wobei ein Rotorlagegebersensor über einen elektrischen Leiter / eine elektrische Leitung mit einem Rotorlagegebersensor-Stecker verbunden ist, wobei der Rotorlagegebersensor vorgesehen ist, um die Rotationsposition eines Geberrades zu bestimmen.

Aus dem Stand der Technik sind bereits Hybridmodule im Einsatzgebiet mit Verbrennungskraftmaschinen bekannt. Zum Beispiel offenbart die DE 11 2015 002872 A5 eine Kupplungsscheibe für eine Reibungskupplungseinrichtung, insbesondere für einen Antriebsstrang eines brennkraftmaschinengetriebenen Fahrzeugs, die Kupplungsscheibe aufweisend eine Scheibendrehachse, ein Eingangsteil, wenigstens ein Zwischenteil und ein Ausgangsteil, wobei einerseits das Eingangsteil und das wenigstens eine Zwischenteil und andererseits das wenigstens eine Zwischenteil und das Ausgangsteil relativ zueinander begrenzt verdrehbar sind, und eine an dem Ausgangsteil angeordnete Fliehkraftpendeleinrichtung. Außerdem betrifft diese ältere Erfindung eine Reibungskupplungseinrichtung, insbesondere für einen Antriebsstrang eines brennkraftmaschinengetriebenen Kraftfahrzeugs, die Reibungskupplungsein- richtung aufweisend eine Kupplungsdrehachse, ein Gehäuse, wenigstens eine Druckplatte und wenigstens eine zu einer Betätigung zwischen einer eingerückten Betätigungsstellung und einer ausgerückten Betätigungsstellung relativ zu der Druckplatte begrenzt axial verlagerbare Anpressplatte.

Ein entsprechendes Hybridmodul ist ebenso aus der WO 2015/188819 A2 bekannt.

Es hat sich gezeigt, dass die bisherigen Lösungen durch eine aufwändige Montage gekennzeichnet sind und daher teuer und nachteilig im Tauschverhalten sind.

Dies zeigt sich beispielsweise bei der bekannten Lösung die unterschiedlichen Sensoren separat voneinander zu montieren, welche über Kabel einzeln angeschlossen und miteinander verbunden werden müssen. Zudem ist in der bereits bekannten Lösung ein Deckblech zur Kabelfixierung nötig. Durch das separate Anbringen der einzelnen Sensoren in dem Hybridmodul ist eine dementsprechend hohe Anzahl an Befestigungsschrauben zu verwenden, welche bei einer Reparatur oder einem Austausch zumindest eines Sensors aufwendig zu lösen sind.

Es ist daher die Aufgabe der Erfindung die Nachteile aus dem Stand der Technik zu beseitigen oder wenigstens zu mildern.

Diese Aufgabe wird bei einem gattungsgemäßen Hybridmodul erfindungsgemäß durch die Merkmale des Anspruchs 1 gelöst. Der der Rotorlagegebersensor, der Rotorlagegebersensor-Stecker und der elektrische Leiter / die elektrische Leitung sind in einer gemeinsamen Baueinheit derart integriert, dass sich eine monolithische Baugruppe, also eine monolithische Sensor-/Erfassungseinheit, bildet.

Dadurch ergibt sich der Vorteil einer kompakten, zusammenhängenden und einteiligen Baugruppe bzw. Sensor-/Erfassungseinheit mit mehreren integrierten Funktionen. Die Montage und Demontage ist bei dieser Lösung von außen möglich und die Baugruppe ist im Falle eines Defekts auch jederzeit austauschbar, ohne dass das Hybridmodul bzw. das Trennelement zerlegt werden muss. Dies ermöglicht eine einfache Handhabung beim Montageprozess durch das Anstecken der monolithischen Baugruppe bzw. Sensor-/Erfassungseinheit, welche alle dafür vorgesehenen Sensoren enthält, an das Anschlussteil, ohne ein sonst übliches zusätzliches Verlegen und /oder Verbinden der Sensoren und Anschlüsse über separate Kabel. Dies ermöglicht im Gegensatz zu dem aktuellen Stand der Technik eine Vereinfachung der Prozesse und eine kostengünstigere Alternative.

Vorteilhafte Ausführungsformen sind in den Unteransprüchen beansprucht und werden nachfolgend erläutert.

So ist es von Vorteil, wenn die Baueinheit ein Gehäuse besitzt, welches zumindest den elektrischen Leiter / die elektrische Leitung ummantelt bzw. einkapselt. Dies hat den technischen Effekt einer festen und kompakten Anordnung, was wiederum den Vorteil mit sich bringt, dass der elektrische Leiter / die elektrische Leitung sich als eine kompakte Einheit montieren lässt und die Ummantelung bzw. Einkapselung des elektrischen Leiters / der elektrischen Leitung einen Schutz vor äußeren Einflüssen bietet.

Zusätzlich ist es zweckmäßig, wenn das Gehäuse als ein Spritzgussbauteil, insbesondere als Kunststoffspritzgussteil, ausgebildet ist. So wird eine Isolation und eine korrekte Führung der elektrischen Leiter / der elektrischen Leitungen gewährleistet. Ein sich dabei ergebender Vorteil ist die Leichtigkeit des Materials und die Möglichkeit eine hohe Stückzahl günstig und mit geringem Aufwand zu fertigen.

Ferner ist es vorteilhaft, wenn zumindest ein Sensor mit dem elektrischen Leiter / der elektrischen Leitung verbunden ist, um die Funktionsfähigkeit des Sensors im Zusammenhang mit dem Anschlussteil zu gewährleisten.

Es ist zweckmäßig, wenn der weitere Sensor als Temperatursensor ausgebildet ist und/oder vom Gehäuse absteht, beispielsweise in einem Bereich zwischen den Rotorlagegebersensor-Stecker und dem Rotorlagegebersensor, und dabei etwa in die gleiche Richtung weist. Dieses Merkmal hat den technischen Effekt, dass die monolithischen Baugruppe bzw. Sensor-/Erfassungseinheit durch die in die gleiche Richtung weisende Anordnung des zumindest einen Sensors, die Möglichkeit eines einfachen Anbringen bzw. Aufstecken an ein Anschlussteil bietet.

Ferner ist es von Vorteil, wenn der elektrische Leiter / die elektrische Leitung als Stanzgitter, d.h. als Kontaktstanzgitter, oder als Kabel, beispielsweise mit mehreren Adern, Litzen oder Leitern, ausgebildet ist. Hierbei liegt der technische Effekt vor, dass ein Stanzgitter bzw. Kontaktstanzgitter aus einem flächenförmigen Ausgangsmaterial, wie zum Beispiel einem Blech, insbesondere einem Kupferblech, hergestellbar ist und durch formgebende Verfahren, insbesondere Stanzen und/oder Biegen, elektrisch leitende Strombahnen und an deren Enden Kontaktelemente ausgebildbar sind. Dies hat den Vorteil einer hohen Stromtragfähigkeit und einer ausreichenden Eigenstabilität, sowie die Möglichkeit des platzsparenden Verbauens innerhalb eines Gehäuses.

Dabei ist es bevorzugt, wenn am Gehäuse Befestigungsbereiche vorgegeben bzw. ausgebildet sind, um eine kraft-, form- und/oder stoffschlüssige Verbindung mit einem Anschlussteil einzugehen, wobei die Befestigungsbereiche als Ösen ausgebildet sind, die zur Aufnahme von Schrauben, Nuten oder Stiften ausgelegt sind. Dies hat den Vorteil einer einfachen und schnellen Anbringung, einer simplen Demontage bzw. Tauschbarkeit, ohne Verwendung von vielen Hilfsmitteln.

Zusätzlich ist es zweckmäßig, wenn der Rotorlagegebersensor und/oder der Rotorlagegebersensor-Stecker und/oder der Temperatursensor von einem durch das Gehäusematerial gebildeten Dom wenigstens teilweise umgeben ist, auf dem vorzugsweise eine erste Dichtung für den Rotorlagesensor und eine zweite Dichtung für den Temperatursensor angebracht ist oder der zum dichtungslosen Verwenden ausgelegt ist. Dies hat den technischen Effekt, dass es sich um eine kompakte Einheit handelt, was erheblich das Montieren, Demontieren oder Austauschen erleichtert und dadurch die Kosten senkt.

Ferner ist es vorteilhaft, wenn der Rotorlagegebersensor an einem Steckplatz, der durch das Gehäuse vorgegeben ist, eingesteckt ist. Dies hat den technischen Effekt des Erreichens einer vorgeschriebenen, nicht veränderbaren Position der monolithischen Baugruppe bzw. Sensor-/Erfassungseinheit und schließt ein falsches Anbringen aus. Der Stecker zur indirekten Verbindung mit einem Rotorlagegebersensor ist eine alternative Lösung für eine direkte Verbindung des Rotorlagegebersensors mit dem Anschlussteil.

Auch ist es zweckmäßig, wenn der Rotorlagegebersensor zum angeordnet werden in einem Trocken- oder Nass- bzw. Ölraum der Trennkupplung ausgelegt ist. Das bietet den Vorteil einer fast uneingeschränkten Nutzung bezüglich der äußeren Umgebungsbedingungen bei Verwendung der monolithischen Baugruppe.

Mit anderen Worten betrifft die Erfindung ein Hybridmodul mit einer monolithischen Baugruppe bzw. Sensor-/Erfassungseinheit mit einem nassen oder trockenen Trennelement, bestehend aus einem integrierten Rotorlagegebersensor, der mit oder ohne Dichtung verwendet werden kann. Gemäß einer speziellen Variante kann an der Stelle des Rotorlagegebersensors ein Gegenstecker für einen Sensor vorhanden sein, der innerhalb des Trennelements montiert ist. Zudem ist ein integrierter Temperatursensor für den Stator des E-Motors mit oder ohne Dichtung enthalten. Der Stecker kann sowohl axial als auch radial ausgeführt werden. Die Verbindung des Steckers mit dem jeweiligen Sensor ist über ein umspritztes Kontaktstanzgitter, welches die Kontur der Zwischenwand eines Gehäuses nachbildet, ausgebildet. Zur Anbringung der monolithischen Baugruppe bzw. Sensor-/Erfassungseinheit an das Hybridmodul sind Befestigungspunkte in Form von Ösen angebracht, welche für Schrauben, Nuten, Bolzen oder Stifte ausgelegt sind.

Der Rotorlagegebersensor kann mit einer ersten Dichtung ausgestattet sein und der Temperatursensor mit einer zweiten Dichtung. Das Geberrad ist an einem Rotorträger, der eine drehfeste Verbindung zum Rotor des E-Motors darstellt, montiert.

Eine Trennwand eines Gehäuses mit Befestigungspunkten gewährleistet eine schnelle und einfache Montage und bietet eine kostengünstige und einfach tauschbare Lösung.

Die Erfindung wird nachfolgend mit Hilfe einer Zeichnung erläutert. Es zeigen:
Fig. 1 eine Querschnittdarstellung der monolithischen Baugruppe und dem entsprechenden Ausschnitt des Hybridmoduls in montiertem Zustand,
Fig. 2 eine perspektivische Darstellung der monolithischen Baugruppe von vorne, mit der Darstellung des Geberrades,
Fig. 3 eine Rückansicht der montierten monolithischen Baugruppe und Darstellung der Befestigungspunkte,
Fig. 4 eine Seitenansicht der monolithischen Baugruppe,
Fig. 5 eine perspektivische Darstellung der monolithischen Baugruppe von hinten, und
Fig. 6 eine vergrößerte perspektivische Darstellung des Rotorlagegebersensor-Steckers in montiertem Zustand an dem Gehäuse des Hybridmoduls.

Die Figuren sind lediglich schematischer Natur und dienen ausschließlich dem Verständnis der Erfindung. Die gleichen Elemente sind mit den selben Bezugszeichen bezeichnet.

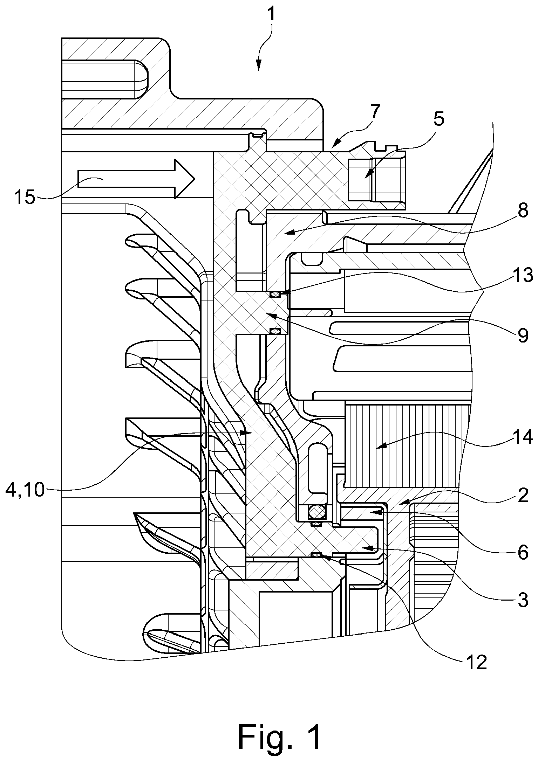

Fig. 1 zeigt den Ausschnitt eines erfindungsgemäßen Hybridmoduls 1, das einen E-Motor besitzt. Der E-Motor besitzt einen Rotorträger 2. Es ist ein Rotorlagegebersensor 3 über einen elektrischen Leiter 4 mit einem Rotorlagegebersensor-Stecker 5 verbunden. Der Rotorlagegebersensor ist 3 vorgesehen, um die Rotationsposition eines Geberrades 6 zu bestimmen. Besonders ist, dass der Rotorlagegebersensor 3, der Rotorlagegebersensor-Stecker 5 und der elektrische Leiter 4 in einer gemeinsamen Baueinheit derart integriert sind, dass sich eine monolithische Baugruppe 7 bildet.

In den Zeichnungen ist lediglich der Ort der elektrischen Leiter 4 / der elektrischen Leitung 4 in den Figuren angedeutet und nicht die physische Realisierung wiedergegeben. Der ,Leiter 4 ist in das Material der kompakten / integralen Baugruppe eingebettet / eingekapselt.

Diese Baugruppe 7 wird an einem Gehäuse 8 befestigt, wobei ein Temperatursensor 9 in das Gehäuse 8 ragt. In dem monolithischen Bauteil 7 ist ein Stanzgitter 10 zur physischen Realisierung des elektrischen Leiters 4 vorhanden, insbesondere eingegossen.

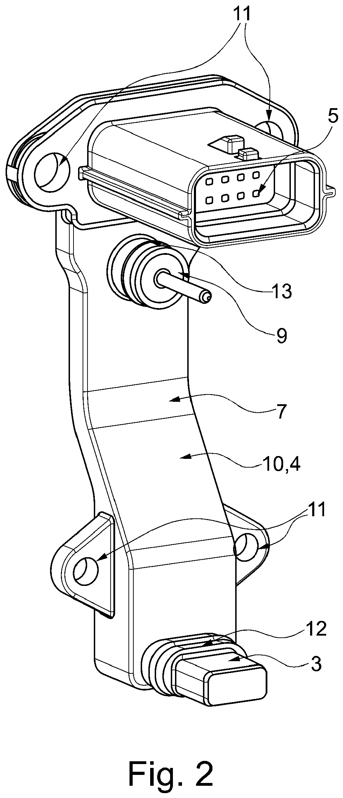

Auf der Außenseite des monolithischen Bauteils 7 sind ösen- oder ohrenartige Befestigungsbereiche 11 zur Aufnahme von Schrauben oder Bolzen oder Nieten vorhanden, wie in Figur 2 zu erkennen ist. Diese werden zur Festlegung am Gehäuse 8 genutzt.

Ferner sind zwei Dichtungen 12 und 13 eingesetzt, um eine Fluiddichtung zu gewährleisten, siehe Fig. 1.

Bei dem Hybridmodul 1 ist der Rotorträger 2 unterhalb des Rotors 14 angebracht, mit dem er über Induktionskräfte zusammenwirkt. Die montierte monolithische Baugruppe 7 wird in gezeigter Montagerichtung 15 an das Hybridmodul 1 angebracht und beinhaltet den Rotorlagegebersensor 3 mit der ersten Dichtung 12, passend angeordnet zum Geberrad 6, verbunden über den elektrischen Leiter / die elektrische Leitung 4, ausgebildet als Stanzgitter 10 mit dem Rotorlagegebersensor-Stecker 5 verbunden.

Das Geberrad 6 ist an dem Rotorträger 2 montiert, welcher eine drehfeste Verbindung zum Rotor 14 des E-Motors darstellt. In die gleiche Richtung, zum Hybridmodul 1 weisend, ist ein Temperatursensor 9 mit einer zweiten Dichtung 13 unterhalb des Rotorlagegebersensor-Steckers 5 und oberhalb des Rotorlagegebersensors 3 angeordnet, welcher ebenfalls über eine elektrische Leitung 4 mit dem Rotorlagegebersensor-Stecker 5 verbunden ist.

Fig. 2 zeigt die monolithische Baugruppe 7, wobei an dessen oberen Ende der Rotorlagegebersensor-Stecker 5 angebracht ist. Unterhalb des Rotorlagegebersensor-Steckers 5 ist in die gleiche Richtung weisend der Temperatursensor 9 angeordnet, welcher eine zweite Dichtung 13 beinhalten kann und über eine elektrische Leitung 4 mit dem Rotorlagegebersensor-Stecker 5 verbunden ist.

Am unteren Ende der monolithischen Baugruppe 7 ist der Rotorlagegebersensor 3 angebracht, welcher ebenfalls in die gleiche Richtung weist und ebenfalls mit dem Rotorlagegebersensor-Stecker 5 über eine elektrische Leitung 4, welche als Stanzgitter 10 ausgebildet sein kann, verbunden ist. Den Rotorlagegebersensor 3 mit etwas Abstand umschließend, befindet sich das Geberrad 6, welches an dem Rotorträger 2 (in Fig. 1 gezeigt) montiert ist.

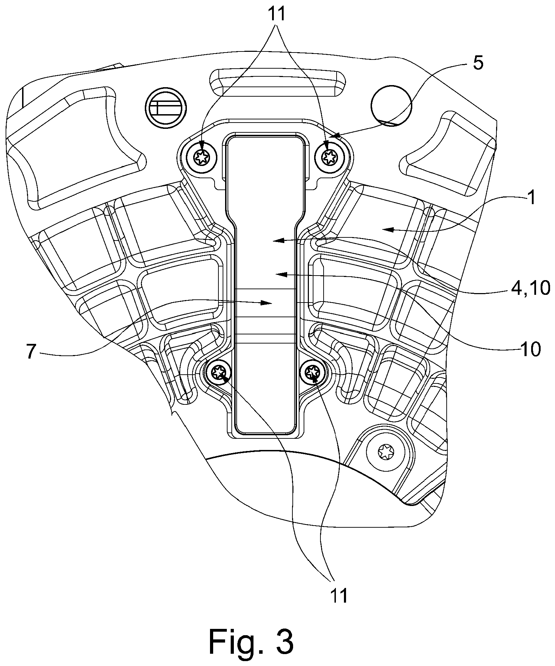

Fig. 3 zeigt die Befestigungsbereiche 11 an dem Gehäuse 8, welche in dieser Ausführungsform vier Ösen umfasst, wovon jeweils eine zu beiden Seiten des Rotorlagegebersensor-Steckers 5 angeordnet ist und jeweils eine oberhalb zu beiden Seiten des Rotorlagegebersensors 3 angeordnet ist.

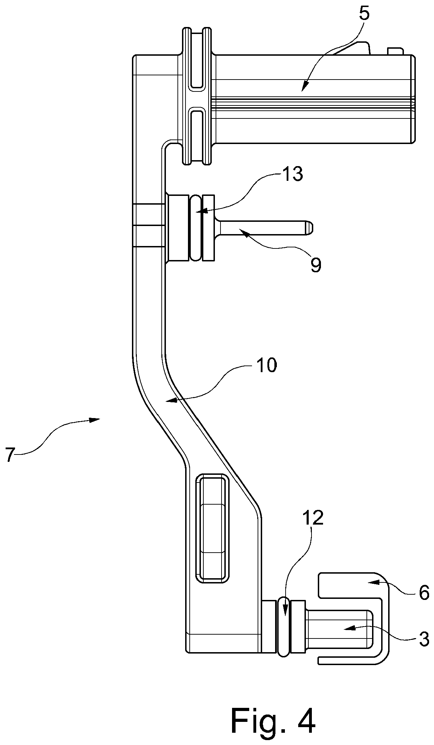

Fig. 4 zeigt eine weitere Darstellung der monolithischen Baugruppe 7 mit dem Rotorlagegebersensor-Stecker 5, dem Temperatursensor 9 sowie dem Rotorlagegebersensor 3 und den seitlich angebrachten Befestigungsbereichen 11 zur Montage an das Hybridmodul 1. Ebenfalls ist das umspritzte Stanzgitter 10 als Verbindung zwischen den Sensoren 3 und 9 sowie dem Rotorlagegebersensor-Stecker 5 angedeutet.

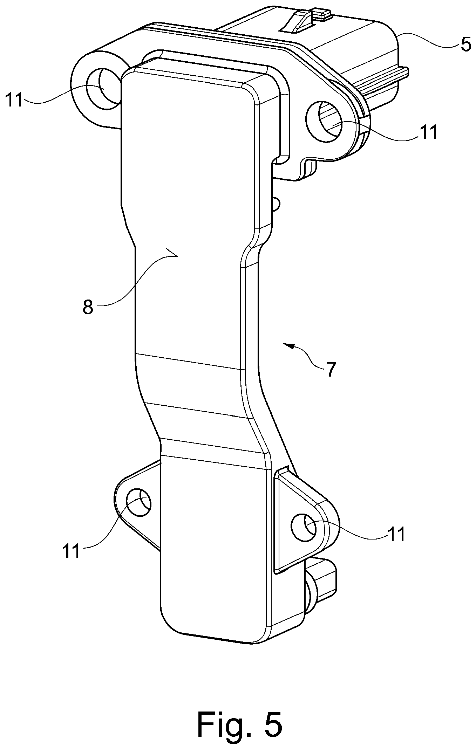

Fig. 5 zeigt die die Montage der monolithischen Baugruppe 7 in der Rückansicht in an dem Hybridmodul 1 montiertem Zustand. Dabei ist die Position der Befestigungsbereiche 11, sowie die Art der Anbringung mit Hilfe der Ösen, die montierte Position des Rotorlagegebersensor-Steckers 5 und die Lage des Stanzgitters 10 dargestellt.

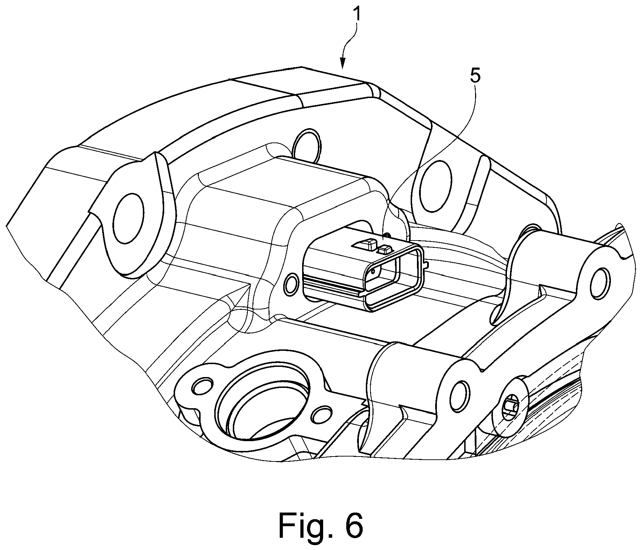

In Fig. 6 ist ein Ausschnitt des Hybridmoduls 1 mit der montierten monolithischen Baugruppe 7 dargestellt, wobei ausschließlich die Lage des Rotorlagegebersensor-Steckers 5 verdeutlicht wird. Der Rotorlagegebersensor 3 wird von dem Gehäuse 8 des Hybridmoduls 1 vollständig umschlossen und ragt in das Innere des Hybridmoduls 1 hinein.

### Bezugszeichenliste

- 1: Hybridmodul
- 2: Rotorträger
- 3: Rotorlagegebersensor
- 4: elektrischer Leiter / elektrische Leitung
- 5: Rotorlagegebersensor-Stecker
- 6: Geberrad
- 7: monolithische Baugruppe
- 8: Gehäuse
- 9: Temperatursensor
- 10: Stanzgitter
- 11: Befestigungsbereiche
- 12: erste Dichtung für Rotorlagegebersensor
- 13: zweite Dichtung für Temperatursensor
- 14: Rotor
- 15: Montagerichtung

## Patentansprüche

1. Hybridmodul (1), das aufweist:
einen E-Motor mit einem Stator, einem Rotor (14) und einem drehfest mit dem Rotor (14) verbundenen Rotorträger (2);
einen über einen elektrischen Leiter (4) mit einem Rotorlagegebersensor-Stecker (5) verbundenen Rotorlagegebersensor (3) zum Bestimmen der Rotationsposition eines Geberrads (6),
wobei der Rotorlagegebersensor (3) radial innerhalb des Rotors (14) und der Rotorlagegebersensor-Stecker (5) radial außerhalb des Rotors (14) angeordnet sind und wobei
der Rotorlagegebersensor (3), der Rotorlagegebersensor-Stecker (5) und der elektrische Leiter (4) derart in einer gemeinsamen Baueinheit integriert sind, dass sich eine monolithische Baugruppe (7) bildet, die tauschbar an ein Anschlussteil ansteckbar ist.

2. Hybridmodul (1) nach Anspruch 1, **dadurch gekennzeichnet, dass** die Baueinheit ein Gehäuse (8) besitzt, dass den elektrischen Leiter (4) ummantelt.

3. Hybridmodul (1) nach Anspruch 2, **dadurch gekennzeichnet, dass** das Gehäuse (8) als ein Spritzgussbauteil ausgebildet ist.

4. Hybridmodul (1) nach einem der Ansprüche 2 oder 3, **dadurch gekennzeichnet, dass** ein weiterer Sensor mit dem elektrischen Leiter (4) verbunden ist.

5. Hybridmodul (1) nach Anspruch 4, **dadurch gekennzeichnet, dass** der weitere Sensor als ein Temperatursensor (9) ausgebildet ist und/oder von dem Gehäuse (8) absteht.

6. Hybridmodul (1) nach einem der Ansprüche 2 bis 5, **dadurch gekennzeichnet, dass** der elektrische Leiter (4) als ein Stanzgitter (10) ausgebildet ist.

7. Hybridmodul (1) nach einem der Ansprüche 2 bis 6, **dadurch gekennzeichnet, dass** an dem Gehäuse (8) Befestigungsbereiche (11) vorgegeben sind, um eine kraft-, form- und/oder stoffschlüssige Verbindung mit einem Anschlussteil einzugehen.

8. Hybridmodul (1) nach einem der Ansprüche 5 bis 7, **dadurch gekennzeichnet, dass** der Rotorlagegebersensor (3) und/oder der Rotorlagegebersensor-Stecker (5) und/oder der Temperatursensor (9) von einem durch ein Material des Gehäuses (8) gebildeten Dom wenigstens teilweise umgeben ist.

9. Hybridmodul (1) nach einem der Ansprüche 2 bis 8, **dadurch gekennzeichnet, dass** der Rotorlagegebersensor (3) an einem durch das Gehäuse (8) vorgegebenen Steckplatz eingesteckt ist.

10. Hybridmodul (1) nach einem der Ansprüche 1 bis 9, **dadurch gekennzeichnet, dass** der Rotorlagegebersensor (3) dazu ausgelegt ist, in einem Trocken- oder Nassraum angeordnet zu werden.

## Claims

1. A hybrid module (1) comprising:
an electric motor having a stator, a rotor (14) and a rotor carrier (2) connected in a rotationally fixed manner to the rotor (14);
a rotor position encoder sensor (3) connected via an electrical conductor (4) to a rotor position encoder sensor-connector (5) in order to determine the rotational position of an encoder wheel (6),
wherein the rotor position encoder sensor (3) is arranged radially inside the rotor (14) and the rotor position encoder sensor-connector (5) is arranged radially outside the rotor (14) and wherein the rotor position encoder sensor (3), the rotor position encoder sensor-connector (5) and the electrical conductor (4) are incorporated in a common structural unit in such a manner that a monolithic assembly (7) is formed, which is interchangeably attachable to a connection piece.

2. The hybrid module (1) according to claim 1, **characterised in that** the structural unit has a housing (8) that encases the electrical conductor (4).

3. The hybrid module (1) according to claim 2, **characterised in that** the housing (8) is formed as an injection moulded component.

4. The hybrid module (1) according to one of claims 2 or 3, **characterised in that** a further sensor is connected to the electrical conductor (4).

5. The hybrid module (1) according to claim 4, **characterised in that** the further sensor is formed as a temperature sensor (9) and/or protrudes from the housing (8).

6. The hybrid module (1) according to one of claims 2 to 5, **characterised in that** the electrical conductor (4) is formed as a stamped grid (10).

7. The hybrid module (1) according to one of claims 2 to 6, **characterised in that** fastening regions (11) are provided on the housing (8) in order to enter into a force-fitting, form-fitting and/or materially bonded connection with a connection piece.

8. The hybrid module (1) according to one of claims 5 to 7, **characterised in that** the rotor position encoder sensor (3) and/or the rotor position encoder sensor-connector (5) and/or the temperature sensor (9) is at least partially surrounded by a dome formed by a material of the housing (8).

9. The hybrid module (1) according to one of claims 2 to 8, **characterised in that** the rotor position encoder sensor (3) is plugged into a slot provided by the housing (8).

10. The hybrid module (1) according to one of claims 1 to 9, **characterised in that** the rotor position encoder sensor (3) is designed to be arranged in a dry room or wet room.

## Revendications

1. Module hybride (1), qui comprend :
un moteur électrique comprenant un stator, un rotor (14) et un support de rotor (2) relié au rotor (14) de manière solidaire en rotation ;
un capteur de position du rotor (3) relié par l'intermédiaire d'un conducteur électrique (4) à une fiche de capteur de position du rotor (5) pour déterminer la position de rotation d'une roue phonique (6),
le capteur de position du rotor (3) étant disposé radialement à l'intérieur du rotor (14) et la fiche de capteur de position du rotor (5) étant disposée radialement à l'extérieur du rotor (14), et le capteur de position du rotor (3), la fiche de capteur de position du rotor (5) et le conducteur électrique (4) étant intégrés dans une unité modulaire commune de manière à former un bloc monolithique (7), qui peut être branché de manière interchangeable à une unité de raccordement.

2. Module hybride (1) selon la revendication 1, **caractérisé en ce que** l'unité modulaire possède un boîtier (8) qui enveloppe le conducteur électrique (4).

3. Module hybride (1) selon la revendication 2, **caractérisé en ce que** le boîtier (8) est réalisé sous la forme d'un composant moulé par injection.

4. Module hybride (1) selon l'une quelconque des revendications 2 ou 3, **caractérisé en ce qu'**un autre capteur est relié au conducteur électrique (4).

5. Module hybride (1) selon la revendication 4, **caractérisé en ce que** l'autre capteur est réalisé sous la forme d'un capteur de température (9) et/ou fait saillie du boîtier (8).

6. Module hybride (1) selon l'une quelconque des revendications 2 à 5, **caractérisé en ce que** le conducteur électrique (4) est réalisé sous la forme d'une grille de connexion (10).

7. Module hybride (1) selon l'une quelconque des revendications 2 à 6, **caractérisé en ce que**, sur le boîtier (8), des zones de fixation (11) sont prédéfinies, afin d'être raccordé à force, par une liaison par complémentarité de formes et/ou de matières à une unité de raccordement.

8. Module hybride (1) selon l'une quelconque des revendications 5 à 7, **caractérisé en ce que** le capteur de position du rotor (3) et/ou la fiche de capteur de position du rotor (5) et/ou le capteur de température (9) sont entourés au moins partiellement d'un dôme formé par un matériau du boîtier (8).

9. Module hybride (1) selon l'une quelconque des revendications 2 à 8, **caractérisé en ce que** le capteur de position du rotor (3) est enfiché dans un connecteur prédéfini par le boîtier (8).

10. Module hybride (1) selon l'une quelconque des revendications 1 à 9, **caractérisé en ce que** le capteur de position du rotor (3) est conçu pour être disposé dans un endroit sec ou humide.
